# EUROPÄISCHE PATENTANMELDUNG

(11) **EP 2 072 878 A2**
(43) Veröffentlichungstag der Anmeldung: **24.06.2009**
(21) Anmeldenummer: 08021025.5
(22) Anmeldetag: 04.12.2008
(51) Int. Cl.: F16L 25/00

(54) **Anschlussvorrichtung für einen ringgewellten Metallschlauch**

(30) Priorität: 17.12.2007 DE 202007017589 U
(71) Anmelder: Witzenmann GmbH, 75175 Pforzheim (DE)
(72) Erfinder:
(74) Vertreter: Lemcke, Brommer & Partner

(57) **Zusammenfassung**

Die vorliegende Erfindung betrifft eine Anschlussvorrichtung für einen ringgeweilten Metallschlauch (17), der ein Anschlussteil (1), eine Überwurfmutter (3) sowie einen zwischen dem Anschlussteil (1) und der Überwurfmutter (3) angeordneten Haltering (4) umfasst, wobei das Anschlussteil (1) eine Aufnahmebohrung (10) zur Aufnahme eines Endbereichs eines ringgewellten Metallschlauchs (17) sowie ein Außengewinde (2) zum Aufschrauben der Überwurfmutter (3) aufweist. Der Haltering (4) und die Überwurfmutter (3) sind so dimensioniert, dass der Endbereich des ringgewellten Metallschlauchs (17) hindurch gesteckt werden kann, und der Haltering (4) ist so ausgebildet, dass er beim Aufschrauben der Überwurfmutter (3) auf das Außengewinde (2) des Anschlussteils (1), bei eingestecktem Metallschlauch (17), in ein Wellental (19) des Metallschlauchs (17) eingreift und den Metallschlauch (17) hierdurch festhält und/oder gegen eine axiale Begrenzung in der Aufnahmebohrung (10) des Anschlussteils (1) drückt. Der Haltering (4) ist umfangsverteilt in axial einstückig ausgebildete Segmente (5) vollständig aufgeteilt, welche im Bereich seiner zum Anschlussteil (1) weisenden Stirnseite mit radial nach innen weisenden Haltevorsprüngen (7) versehen sind, die im Ausgangszustand bei eingestecktem Metallschlauch (17) in ein Wellental (19) eingreifen. Die Segmente (5) sind bei noch nicht aufgeschraubter Überwurfmutter (3), im Wesentlichen ohne elastische Verformung, um eine im wesentlichen tangential verlaufende Kippachse so nach Außen kippbar, dass ein Einsteckendes ringgewellten Metallschlauchs (17) an den Haltevorsprüngen (7) vorbei möglich ist.

## Beschreibung

Die Erfindung betrifft eine Anschlussvorrichtung für einen ringgewellten Metallschlauch nach dem Oberbegriff des Anspruchs 1. Demnach umfasst die vorliegende Anschlussvorrichtung ein Anschlussteil, eine Überwurfmutter sowie einen zwischen dem Anschlussteil und der Überwurfmutter angeordneten Haltering. Das Anschlussteil weist eine Aufnahmebohrung zur Aufnahme eines Endbereichs eines ringgewellten Metallschlauchs auf Ferner ist am Anschlussteil ein Außengewinde zum Aufschrauben der Überwurfmutter vorgesehen. Der Haltering und die Überwurfmutter sind so dimensioniert, dass der Endbereich des ringgewellten Metallschlauchs hindurch gesteckt werden kann. Der Haltering ist ferner so ausgebildet, dass er beim Aufschrauben der Überwurfmutter auf das Außengewinde des Anschlussteils, bei eingestecktem Metallschlauch, in ein Wellental des Metallschlauchs eingreift und den Metallschlauch hierdurch festhält und/oder gegen eine axiale Begrenzung in der Aufnahmebohrung des Anschlussteils drückt.

Das fluiddichte und mechanisch widerstandsfähige Anschließen eines ringgewellten Metallschlauchs ist aufgrund von dessen Flexibilität sehr viel problematischer als das Anschließen eines zylindrischen Rohrs. Herkömmliche Anschlusstechniken zur Anbindung einer Armatur an einen ringgewellten Metallschlauch erfordern demgemäß besondere Sachkenntnis und Spezialwerkzeug vor Ort. So gibt es beispielsweise Schweißarmaturen, bei denen eine Hülse über das anzuschließende Ende des Metallschlauchs gesteckt und mit diesem rundum verschweißt wird. Alternativ hierzu gibt es Lötarmaturen, die durch Löten mit dem Metallschlauchwerbunden werden. Eine dritte Fügetechnik verformt das Schlauchende durch Zusammenbördeln der letzten zwei bis drei Wellen, um hierdurch einen Flansch zu bilden, an den dann eine speziell ausgebildete Armatur angeflanscht werden kann.

Die eingangs beschriebene Anschlusstechnik, bei der zunächst eine Überwurfmutter und dann ein Haltering auf den Metallschlauch aufgeschoben, und danach ein Anschlussteil auf den Metallschlauch aufgesteckt wird, wobei als letzter Schritt die Überwurfmutter auf ein Außengewinde des Anschlussteils aufgeschraubt wird und hierbei den zwischenliegenden Haltering in das Anschlussteil hineindrückt, so dass dieser den Metallschlauch festhält, kann demgegenüber ohne besonderes Werkzeug und ohne spezielle Fachkenntnisse angewandt werden.

Ein Beispiel für eine solche Anschlusstechnik ist in der DE 201 21 607 U1 beschrieben. Die dortige Anschlussvorrichtung verwendet einen verformbaren, geschlossenen Haltering. Das Anschlussteil verfügt über eine Aufnahmebohrung, die sich öffnungsseitig konisch aufweitet und innen von einer umlaufenden Dichtfläche zur Anlage des Metallschlauchendes begrenzt ist. Gleichzeitig ist die Überwurfmutter so ausgebildet, dass sie beim Aufschrauben auf das Außengewinde des Anschlussteils an der hinteren Stirnfläche des verformbaren Halterings anliegend den Haltering axial in das Anschlussteil hinein verschiebt. Der verformbare Haltering gleitet beim Aufschrauben der Überwurfmutter entlang der konischen Aufweitung der Aufnahmebohrung und verringert hierbei seinen Durchmesser, so dass seine vordere Stirnfläche gegen die erste Welle des Metallschlauchs aufläuft und diese durch im Wesentlichen axiale Krafteinleitung gegen die Dichtfläche des Anschlussstücks drückt und zusammenbördelt.

Dass sich der Haltering bei diesem Stand der Technik beim Aufschrauben der Überwurfmutter notwendigerweise verformt, ist allerdings nicht in jeder Hinsicht optimal. Denn das Verformen geschieht durch das Gleiten entlang der konischen Wandung der Aufnahmebohrung des Anschlussteils, wodurch .sehr hohe Reibungskräfte auftreten, was zum Einen die axiale Kraft zur Bördelung der vordersten Schlauchwelle verringert und zum Anderen gegebenenfalls sogar zur Spanbildung führt. Der Bereich der vorderen Stirnseite des Halterings, der den Reibungskräften direkt ausgesetzt ist, ist allerdings hinsichtlich der möglichst kontrollierten Verformung besonders sensibel, da dieser für eine Dichtwirkung der Anschlussvorrichtung sorgen soll.

Das Auftreten von sehr hohen Reibungskräften führt hinsichtlich der notwendigen Verformbarkeit des Halterings beim Stand der Technik nach der DE 201 21 607 U1 außerdem zu einem Zielkonflikt. Denn wenn der Haltering so verformbar ausgestaltet ist, dass er seinen Durchmesser verringern kann, ist auch eine Verformbarkeit in Axialrichtung gegeben. Axial soll der Haltering jedoch möglichst gar nicht verformbar sein, da er den Metallschlauch mittels im Wesentlichen axialer Krafteinleitung festhalten und dichtend gegen die Dichtfläche drücken soll. Gleichzeitig muss die axiale Krafteinleitung wegen der hohen Reibungskräfte jedoch besonders hoch sein, so dass im Ergebnis kaum eine kontrollierte Verformung des Halterings entstehen kann.

Ein weiteres Beispiel für eine Anschlussvorrichtung, die ein ähnliches Prinzip wie dasjenige der eingangs beschriebenen Anschlussvorrichtung umsetzt, ist in der US 2004/0155463 A1 veröffentlicht worden. Als Anschlussvorrichtung wird dort eine vormontierte Einheit aus einem Anschlussteil, einer Überwurfmutter und einem zwischenliegenden Haltering verwendet, welche mittels eines Abstandhalters in definierter Position vormontiert ist. Der Haltering ist aus einer Basis mit geschlossenem Umfang und rückseitigen Haltekrallen sowie einer Anzahl von umfangsverteilten, die Basis axial verlängernden und elastisch verformbar an dieser angebrachten Haltesegmenten gebildet.

Wenn ein ringgewellter Schlauch in diese vormontierte Einheit eingesteckt wird, drückt er die Haltesegmente des Halterings gegen eine elastische Rückstellkraft ihrer elastischen Verankerung in der Basis des Halterings radial nach Außen, so dass das Einstecken des Wellschlauchs durch den Haltering hindurch möglich ist. Die rückseitigen Haltekrallen der Basis des Halterings stützen sich an der rückwärtigen, vom Anschlussteil abgewandten Stirnseite der Überwurfmutter ab, so dass der Haltering nicht mit dem Wellschlauch in die Aufnahmebohrung des Anschlussteils hinein geschoben wird. Die Basis des Halterings durchgreift daher die Überwurfmutter, so dass deren Zentralbohrung Platz für den Wellschlauch und zusätzlich den Haltering bieten muss. Dementsprechend ist eine axiale Krafteinleitung, von der Überwurfmutter über den Haltering bis in die Aufnahmebohrung des Anschlussteils hinein, nicht möglich, denn die Überwurfmutter ist radial zu weit von der Achse des Wellschlauchs entfernt.

Nach einem Einrasten der Haltesegmente des Halterings in einem Wellental des Wellschlauchs wird der Abstandhalter der vormontierten Anschlussvorrichtung entfernt und die Überwurfmutter auf das Anschlussteil aufgeschraubt. Hierbei drückt sie gegen separat ausgebildete Schulterflächen der Haltesegmente, wodurch diese, geführt durch eine zylindrische Innenfläche des Anschlussteils, die vorderste Welle des Wellschlauchs gegen einen Anschlag im Anschlussteil bördeln und dort festhalten. Auch hier ist keine axiale Krafteinleitung vorgesehen. Des Weiteren ist der in dieser Schrift zum Stand der Technik beschriebene Haltering komplex und aufwendig aufgebaut.

Ausgehend von diesem Stand der Technik liegt der vorliegende Erfindung die Aufgabe zugrunde, eine Anschlussvorrichtung der eingangs genannten Art hinsichtlich ihrer einfachen Handhabbarkeit und ihrer definierten Wirkung weiter zu verbessern, wobei die hierbei verwendeten Bauteile möglichst einfach aufgebaut bleiben sollen.

Gelöst ist diese Aufgabe durch eine Anschlussvorrichtung mit den Merkmalen des Anspruchs 1. Bevorzugte Ausgestaltungen und Weiterbildungen der erfindungsgemäßen Anschlussvorrichtung sind in den Ansprüchen 2 bis 20 niedergelegt.

Nach der vorliegenden Erfindung wird eine Anschlussvorrichtung der eingangs genannten Art also so weitergebildet, dass der Haltering umfangsverteilt in axial einstückig ausgebildete Segmente vollständig aufgeteilt wird. Die Segmente sind im Bereich seiner zum Anschlussteil weisenden Stirnseite mit radial nach Innen weisenden Haltevorsprüngen versehen, die im Ausgangszustand bei eingestecktem Metallschlauch in ein Wellental desselben eingreifen. Solange die Überwurfmutter noch nicht oder lediglich zum Teil aufgeschraubt ist, sind die Segmente des Halterings erfindungsgemäß, im Wesentlichen ohne elastische Verformung, um eine im Wesentlichen tangential verlaufende Kippachse derart nach Außen kippbar, dass ein Einstecken des ringgewellten Metallschlauchs an den Haltevorsprüngen der Segmente vorbei möglich ist.

Die Durchgangsbohrung der Überwurfmutter und der Haltering weisen also im Wesentlichen den gleichen lichten Innenquerschnitt auf, wobei die Haltevorsprünge des Halterings bzw. von dessen Segmenten den lichten Innenquerschnitt des Halterings verkleinern, so dass ein Wellschlauch, der dem lichten Innenquerschnitt der Überwurfmutter angepasst ist, im Ausgangszustand, d.h. im nicht nach Außen gekippten Zustand der Segmente des Halterings nicht an den Haltevorsprüngen vorbei durch den Haltering hindurch geschoben werden kann. Das Anschlussteil hingegen weist eine Aufnahmebohrung auf, deren lichter Innenquerschnitt den Haltering in seinem Ausgangszustand aufnehmen kann, und zwar derart angepasst, dass die Segmente des Halterings nicht mehr nach Außen gekippt werden können, wenn der Haltering bei aufgeschraubter Überwurfmutter in der Aufnahmebohrung des Anschlussteils sitzt. In diesem Einbauzustand halten die Haltevorsprünge der gegen ein Kippen gesicherten Segmente des Halterings den Metallschlauch fest, indem die Haltevorsprünge zwischen zwei Wellen des Metallschlauchs eingreifen und diesen hierdurch festlegen. Solange der Haltering noch nicht in der Aufnahmebohrung des Anschlussteils sitzt, können seine Segmente demnach so weit radial nach Außen gekippt werden, dass jedes seiner Teile, insbesondere die Haltevorsprünge, außerhalb eines lichten Querschnitts liegen, der in etwa dem lichten Querschnitt der Überwurfmutter und demnach dem Gesamtquerschnitt eines anzuschließenden Metallschlauchs entspricht.

Die erfindungsgemäße Anschlussvorrichtung kann Einzelteil für Einzelteil an einem Ende eines ringgewellten Metallschlauchs angebracht werden; vorzugsweise ist es jedoch auch möglich, die erfindungsgemäße Anschlussvorrichtung als vormontierte Einheit bereitzustellen, in die ein ringgewellter Metallschlauch ganz einfach eingesteckt und durch Anziehen der Überwurfmutter an ihr befestigt wird. In beiden Fällen muss gewährleistet sein, dass der Haltering noch nicht so weit in die Aufnahmebohrung des Anschlussteils eingeführt ist, dass die Segmente des Halterings nicht mehr nach Außen gekippt werden können.

Wenn die Anschlussvorrichtung in Einzelteilen montiert wird, ist dies naturgemäß am einfachsten. Denn dann wird zunächst die Überwurfmutter auf den Metallschlauch aufgeschoben und dann der Haltering so auf den Metallschlauch aufgebracht, dass seine Haltevorsprünge in ein Wellental des Metallschlauchs eingreifen. Sodann wird der Metallschlauch zusammen mit dem Haltering in die Aufnahmebohrung des Anschlussteils eingesteckt und nachfolgend die Überwurfmutter auf das Außengewinde des Anschlussteils aufgeschraubt, bis der Haltering so weit in der Aufnahmebohrung des Anschlussteils sitzt, dass seine Segmente nicht mehr nach Außen gekippt werden können.

Im Falle einer vormontierten Anschlussvorrichtung muss gewährleistet sein, dass entweder die Überwurfmutter axial länger als der Haltering ausgebildet ist, so dass der Haltering noch nicht in die Aufnahmebohrung des Anschlussteils hinein reicht, während sich die Überwurfmutter schon auf dem Außengewinde des Anschlussteils befindet, oder aber dass das Anschlussteil öffnungsseitig mit einer Vergrößerung der Aufnahmebohrung versehen ist, so dass die Segmente des Halterings sich in diesem Bereich noch nach Außen kippen können, obwohl der Haltering bereits zum Teil in das Anschlussteil hineinreicht.

In beiden Fällen bietet es enorme Vorteile, wenn ein Halteelement vorgesehen ist, das den Haltering im Inneren der Überwurfmutter hält. Im Falle einer Montage der erfindungsgemäßen Anschlussvorrichtung vor Ort gewährleistet dies zum Einen, dass der erfindungsgemäß vollständig in axial einstückig ausgebildete Segmente aufgeteilte Haltering nicht auseinander fällt, sondern in der Überwurfmutter zusammengehalten wird und zusammen mit dieser auf den Metallschlauch ohne auseinanderzufallen aufgesteckt werden kann. Im Fall einer vormontierten Anschlussvorrichtung, in die der Metalischlauch eingesteckt wird, gewährleistet ein Halteelement zum Festhalten des Halterings in der Überwurfmutter zum Anderen, dass der Haltering nicht beim Einstecken des Metallschlauchs bereits mit in die Aufnahmebohrung des Anschlussteils hinein geschoben wird, was ein Öffnen des Halterings durch die Kippbewegung der Segmente unmöglich machen würde.

Wenn der Haltering an seiner zur Überwurfmutter weisenden, rückseitigen Stirnseite eine radial nach Außen weisende Auskragung oder radial nach Außen vorspringende Fußelemente aufweist, kann das genannte Halteelement in vorteilhaft einfacher Ausbildung in der Art eines Sprengrings ausgebildet sein, der die Auskragung oder die Fußelemente in der Überwurfmutter hält. Anstelle des Sprengrings kann das Halteelement auch ein schmaler Ring mit einem Außengewinde oder mit nach Außen weisenden Krallen sein, der in das Gewinde der Überwurfmutter eingeschraubt oder eingesetzt werden kann und die Segmente so in der Überwurfmutter festhält. Das genannte Halteelement kann anstelle einer sprengringartigen Ausbildung auch als geschlossener Ring oder als eine umfangsverteilt angeordnete Anzahl an Vorsprüngen ausgebildet sein und durch Einpressen, Einkleben, Einschnappen, Einrasten, Einlöten, Einschweißen oder eine sonstige geeignete Befestigungstechnik in der Überwurfmutter fixiert sein, um die Fußelemente oder die Auskragung des Halterings in der Überwurfmutter festzuhalten.

Alternativ kann die Überwurfmutter insofern an einen Haltering mit nach Außen weisenden Auskragungen bzw. Fußelementen angepasst sein, als sie zwischen dem Boden der Mutter und dem Innengewinde eine ringförmige oder in umfangsverteilt angeordnete Vorsprünge aufgeteilte Ausformung enthält, die die Auskragung bzw. das Fußelement des Halterings in Richtung der Öffnung der Überwurfmutter hintergreift. Gleichzeitig ist der Boden der Überwurfmutter mit einer Öffnung versehen, die es ermöglicht, den Haltering trotz seiner nach Außen weisenden Auskragungen bzw. Fußelemente durch die Öffnung hindurch bis an die eben genannten Ausformungen heran einzuführen und dann ein Halteelement in die Öffnung des Bodens der Überwurfmutter einzusetzen und dort zu fixieren, das die Auskragungen bzw. Fußelemente des Halterings festhält. Dieses Halteelement kann wiederum als Ring oder wahlweise als eine Anzahl von umfangsverteilt anzubringenden Vorsprüngen ausgebildet sein. Es kann wiederum durch Einpressen, Einkleben, Einschnappen, Einrasten, Einlöten, Einschweißen oder Einschrauben im Boden der Überwurfmutter fixiert werden.

Alle beschriebenen Arten eines erfindungsgemäß vorgesehenen Halteelements in der Überwurfmutter können auch durch plastische Umformung der Überwurfmutter hergestellt werden, so dass kein separates Teil als Halteelement notwendig ist.

Weitere Vorteile ergeben sich, wenn die Segmente des Halterings mittels eines Federrings elastisch gegen eine radial nach Außen weisende Kippbewegung gesichert sind, insbesondere, wenn gleichzeitig die radial nach Innen weisenden Haltevorsprünge der Segmente zur Ausbildung einer Ausziehsicherung für den Metallschlauch als Klinken ausgeformt sind. Hierdurch kann eine besonders einfache Montage dann erzielt werden, wenn die erfindungsgemäße Anschlussvorrichtung als vormontierte Einheit bereitgestellt wird. Ein Einstecken des Metallschlauchs in diese vormontierte Einheit führt dann dazu, dass die Segmente gegen den Widerstand des Federrings - der ein Sprengring oder ein Elastomer-Ring sein kann - nach Außen gekippt werden, wenn die erste Wellung des Metallschlauchs hindurchgleitet, während die nach Art einer Klinke ausgebildeten Haltevorsprünge der Segmente elastisch in ihre Ausgangsposition zurückgestellt werden, sobald das erste Wellental des Metallschlauchs die Haltevorsprünge passiert. Hierdurch ist eine vorläufige Ausziehsicherung gegeben, während die Überwurfmutter zum endgültigen Befestigen der Anschlussvorrichtung auf das Außengewinde des Anschlussteils aufgeschraubt wird. Diese Weiterbildung der Erfindung gewährleistet also eine hohe Montagesicherheit.

Als weitere bevorzugte Ausgestaltung der vorliegenden Erfindung können die Segmente des Halterings eine axiale Elastizität aufweisen, die insbesondere durch eine elastische Ausbildung von im Einbauzustand an die Überwurfmutter angrenzenden Segmentfußbereichen hergestellt ist, die beispielsweise durch eine federnde, im entspannten Zustand konische Formung von Auskragungen oder von Fußelementen der Segmente hergestellt sein kann.

Eine axiale Elastizität der Segmente des Halterings ist dann besonders vorteilhaft, wenn der Metallschlauch durch den Haltering nicht nur festgehalten, sondern auch axial gegen eine Dichtfläche gedrückt wird. Die axiale Elastizität der Haltering-Segmente ermöglicht es dann, die Überwurfmutter etwas weiter auf das Anschlussteil aufzuschrauben, als es für die Dichtwirkung notwendig wäre. Hierdurch können Setzungen der Anschlussvorrichtung im Betrieb ausgeglichen werden, ohne die Dichtwirkung zu gefährden.

Wie an sich bekannt, kann das Anschlussteil mit einer axialen Begrenzung von dessen Aufnahmebohrung versehen sein, die als im Wesentlichen radial ausgerichtete Dichtfläche ausgebildet ist. Soweit der Haltering beim Aufschrauben der Überwurfmutter das Ende des Metallschlauchs gegen diese Dichtfläche presst, kann die Anschlussvorrichtung an dieser Dichtfläche fluiddicht abgedichtet werden. Dies kann mittels einer eingelegten Flachdichtung erfolgen, die aus Metall oder einem Elastomer bestehen oder als Faserdichtung ausgebildet sein kann.

Die Dichtwirkung an einer solchen Dichtfläche kann verbessert werden, indem das Anschlussteil, der Haltering und die Überwurfmutter so dimensioniert und ausgebildet werden, dass die Haltevorsprünge der Haltering-Segmente beim Festziehen der Überwurfmutter in das erste Wellental des Metallschlauchs eingreifen und die erste Welle axial so gegen die Dichtfläche des Anschlussteils drücken, dass diese unter Ausbildung eines Bördels flach gepresst wird. Hierdurch kann dann sogar eine metallische Dichtung zwischen dem Bördel des Metallschlauchs und der Dichtfläche des Anschlussteils hergestellt werden, ohne eine separate Dichtung einzusetzen. Eine solche metallische Dichtung bietet große Vorteile hinsichtlich der universellen Einsetzbarkeit auch bei aggressiven und/oder sehr heißen bzw. sehr kalten Fluiden.

Um die Flächenpressung des Bördels an der Dichtfläche zu erhöhen, und hierdurch die metallische Dichtung noch zu verbessern, kann die Dichtfläche konvex ausgebildet oder mit einem umlaufenden Absatz oder Vorsprung versehen sein.

Wenn ein Metallschlauch verwendet wird, dessen Wellenaußenkrempen eine größere axiale Ausdehnung aufweisen, als die Wellentäler, vorzugsweise mit einem Faktor von etwa 2 bis 3, ergeben sich Vorteile dahingehend, dass beim Bördeln der vordersten Welle ein Bördel entsteht, der radial deutlich über den Außendurchmesser des restlichen Metallschlauch übersteht und dementsprechend eine rein axiale Einleitung der Kraft vom Haltering auf den Bördel und über diesen auf die Dichtfläche ermöglicht.

Ausführungsbeispiele für eine Anschlussvorrichtung nach der vorliegenden Erfindung werden im Folgenden anhand der beigefügten Zeichnungen näher beschrieben und erläutert. Es zeigen:
- Figur 1: eine perspektivische Explosionsdarstellung einer erfindungsgemäßen Anschlussvorrichtung im Ausgangszustand;
- Figur 2: eine Darstellung wie Figur 1 beim Einstecken eines Metallschlauchs in die Anschlussvorrichtung;
- Figur 3: eine Darstellung wie Figur 2, mit eingerastetem Metallschlauch;
- Figur 4: eine Darstellung wie Figur 3, jedoch eines modifizierten Ausführungsbeispiels;
- Figur 5: eine teilgeschnittene seitliche Darstellung der Anschlussvorrichtung gemäß Figur 1;
- Figur 6: eine teilgeschnittene seitliche Darstellung der Anordnung aus Figur 2;
- Figur 7: eine teilgeschnittene seitliche Darstellung der Anordnung aus Figur 3;
- Figur 8: eine teilgeschnittene seitliche Darstellung der Anordnung aus Figur 4;
- Figur 9: eine teilgeschnittene seitliche Darstellung der fertig montierten Anschlussvorrichtung aus den Figuren 1 bis 3 und 5 bis 7;
- Figur 10: eine perspektivische Darstellung eines einzelnen Segments eines Halterings;
- Figur 11: eine schematische Schnittdarstellung des Segments aus Figur 10;
- Figur 12: eine teilgeschnittene seitliche Darstellung eines Details eines weiteren Ausführungsbeispiels einer erfindungsgemäßen Anschlussvorrichtung;
- Figur 13: eine teilgeschnittene seitliche Darstellung eines Details eines weiteren Ausführungsbeispiels einer erfindungsgemäßen Anschlussvorrichtung.

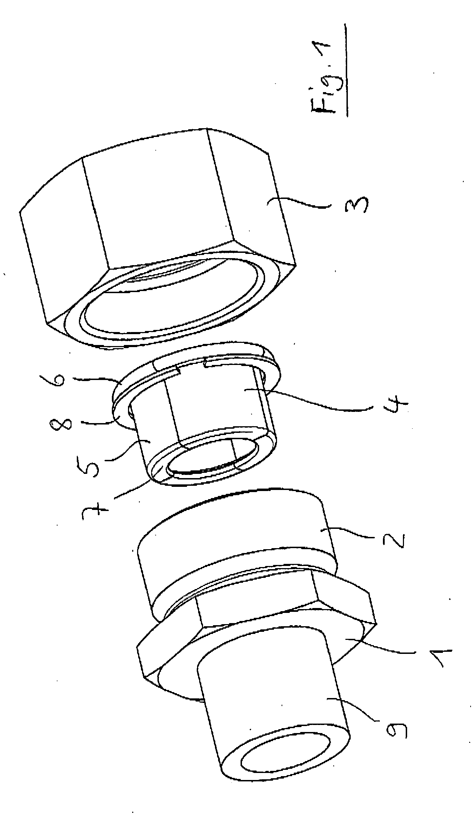

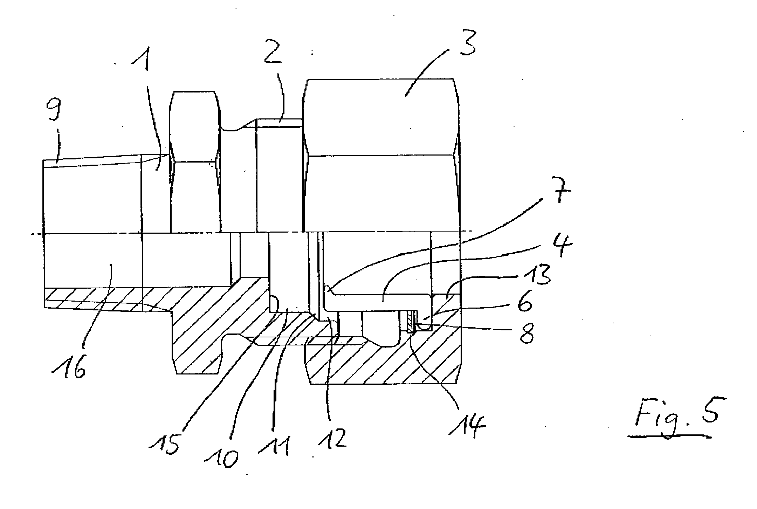

Das in den Figuren 1 bis 3 gezeigte Ausführungsbeispiel für eine erfindungsgemäße Anschlussvorrichtung besteht aus einem Anschlussteil 1 mit einem Außengewinde 2, einer Überwurfmutter 3 und einem zwischen diesen beiden Bauteilen angeordneten Haltering 4. Der Haltering 4 besteht aus insgesamt vier einzelnen Segmenten 5, die mit einem Segmentfußbereich mit radialen Auskragungen 6 versehen sind und an ihrem anderen Ende, im Bereich der zum Anschlussteil 1 weisenden Stirnseite des Halterings 4, radial nach Innen weisende Haltevorsprünge 7 aufweisen. Die einzelnen Segmente 5 des Halterings 4 werden mittels eines als Sprengring ausgebildeten Haltelements 8 zusammengehalten und gleichzeitig, wie in den teilgeschnittenen Darstellungen der Figuren 5 bis 8 besser zu sehen ist, in der Überwurfmutter 3 festgehalten. Das Anschlussteil 1 ist auf seiner schlauchabgewandten Seite mit einem weiteren Gewinde 9 versehen, um den Anschluss des Metallschlauchs an ein Aggregat oder dergleichen zu ermöglichen.

Figur 5 zeigt die Anordnung aus Figur 1 in einer seitlichen, teilgeschnittenen Darstellung. Hier wird deutlich, dass die dargestellte Anschlussvorrichtung als vormontierte Einheit zur Verfügung gestellt wird. Die Überwurfmutter 3 besitzt eine axiale Ausdehnung, die die axiale Ausdehnung des Halterings 4 übertrifft. Gleichzeitig verfügt das Anschlussteil 1 über eine Aufnahmebohrung 10, die sich über eine Einführschräge 11 in eine Ausdrehung 12 erweitert, so dass insgesamt der Haltering 4, trotzdem die Überwurfmutter 3 bereits ein Stück weit auf das Außengewinde 2 des Anschlussteils 1 aufgeschraubt ist, noch nicht in die Aufnahmebohrung 10 hineinreicht und auch noch nicht an die Einführschräge 11 angrenzt.

Figur 5 zeigt den Haltering 4 in seinem Ausgangszustand und verdeutlicht insbesondere, wie die Auskragung 6 des Halterings 4, an eine Rückwand 13 der Überwurfmutter 3 angrenzend, in der Überwurfmutter 3 sitzt und vom Sprengring bzw. Halteelement 8 in der Überwurfmutter 3 gehalten wird. Zu diesem Zweck ist in der Überwurfmutter 3 eine Nut 14 vorhanden, in der sich das Halteelement 8 abstützt. Der Haltering 4 besitzt in etwa denselben lichten Innenquerschnitt wie die Überwurfmutter 3 bzw. deren Rückwand 13, wobei die Haltevorsprünge 7 der Segmente des Halterings 4 im dargestellten Ausgangszustand in diesen lichten Innenquerschnitt hineinreichen. Die Aufnahmebohrung 10 des Anschlussteils 1 ist hingegen so dimensioniert, dass sie den Haltering 4 in seinem Ausgangszustand passend aufnehmen kann. Die Aufnahmebohrung 10 wird stirnseitig durch eine als axiale Begrenzung dienende radiale Dichtfläche 15 begrenzt. Eine Durchgangsbohrung 16 im Anschlussteil 1, die radial innerhalb der Dichtfläche 15 verläuft, stellt den Durchfluss durch die gezeigte Anschlussvorrichtung sicher.

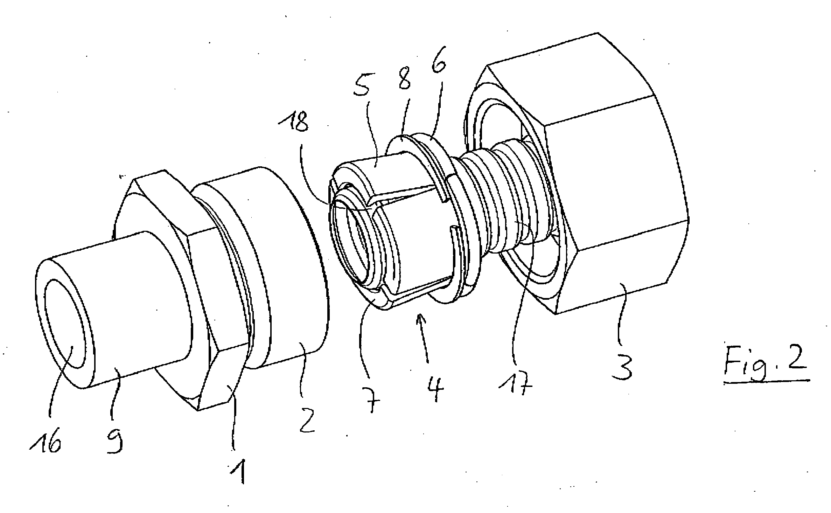

Figur 2 zeigt in einer der Figur 1 entsprechenden Darstellung, wie ein ringgewellter Metallschlauch 17 in die vormontierte Anschlussvorrichtung eingesteckt wird. In dem Moment, in dem die Außenkrempe 18 der ersten Schlauchwelle die Haltevorsprünge 7 der Segmente 5 des Halterings 4 passiert, werden die Haltevorsprünge 7 nach Außen gedrückt und dementsprechend die Segmente 5 radial nach Außen gekippt, ohne sich zu verformen. Das Halteelement 8 gewährleistet dabei, dass der Haltering 4 in der Überwurfmutter 3 festgehalten wird und nicht etwa zusammen mit dem Metallschlauch 17 in die Aufnahmebohrung 10 des Anschlussteils 1 hinein geschoben wird.

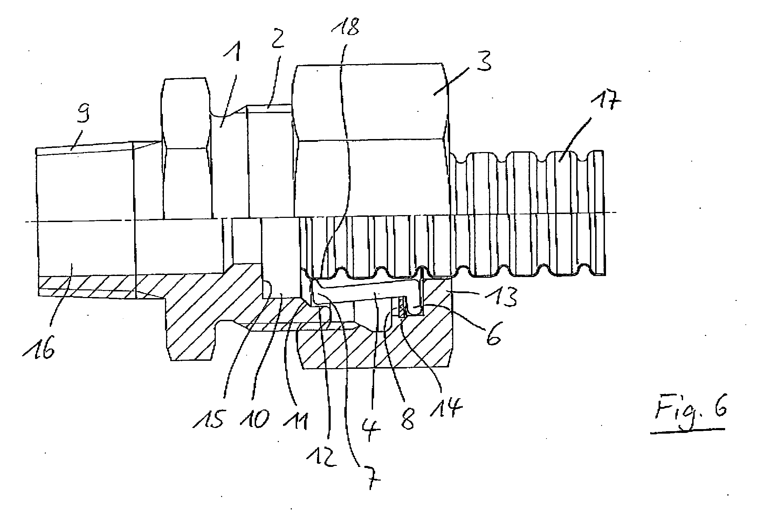

Figur 6 verdeutlicht diesen Vorgang wiederum einer seitlichen teilgeschnittenen Darstellung entsprechend Figur 5. Da die Nut 14 zur Verankerung des Halteelements 8 für die Auskragung 6 der Segmente 5 des Halterings 4 wie dargestellt so weit von der Rückwand 13 der Überwurfmutter 3 beabstandet ist, um der Auskragung 6 so viel Platz zu lassen, dass sie zwischen dem Halteelement 8 und der Rückwand 13 der Überwurfmutter 3 kippbar beweglich ist, können die Segmente 5 insgesamt ohne sich verformen zu müssen so radial nach Außen kippen, dass die Haltevorsprünge 7 einen lichten Querschnitt freigeben, der zum Einstecken des Metallschlauchs 17 ausreichend ist. Die Ausdrehung 12 im Anschlussteil 1 stellt den hierfür notwendigen radialen Raum zur Verfügung.

Figur 2 ist zwar eine Explosionsdarstellung der Anordnung aus Figur 6, jedoch kann sie, wenn sie nicht als Explosionsdarstellung, sondern als lediglich perspektivische Ansicht verstanden wird, verdeutlichen, dass das vorliegende Ausführungsbeispiel auch in Einzelteilen montiert werden kann. In diesem Fall wird zunächst die Überwurfmutter 3 auf den Metallschlauch 17 aufgeschoben und dann, wie hier dargestellt, der vom Halteelement 8 zusammengehaltene Haltering 4 auf das Ende des Metallschlauchs 17 aufgeschoben. Hierbei werden die Segmente 5 nach Außen gekippt, so dass die Haltevorsprünge 7 der Segmente 5 über die Außenkrempe 18 der ersten Welle gleiten können. Die Segmente 5 können anschließend von Hand leicht wieder in ihre Ausgangsposition zurückgekippt werden, wenn der Haltering 4 so weit über den Metallschlauch 17 gezogen ist, dass die Haltevorsprünge 7 in das erste Wellental eingreifen können. Sodann wird das Anschlussteil 1 auf den so vorbereiteten Metallschlauch 17 aufgesteckt und die Überwurfmutter 3 auf das Außengewinde 2 des Anschlussteils aufgeschraubt.

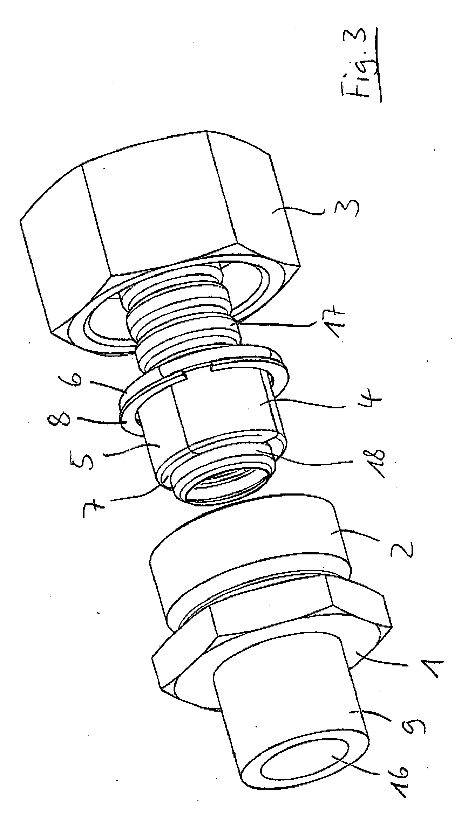

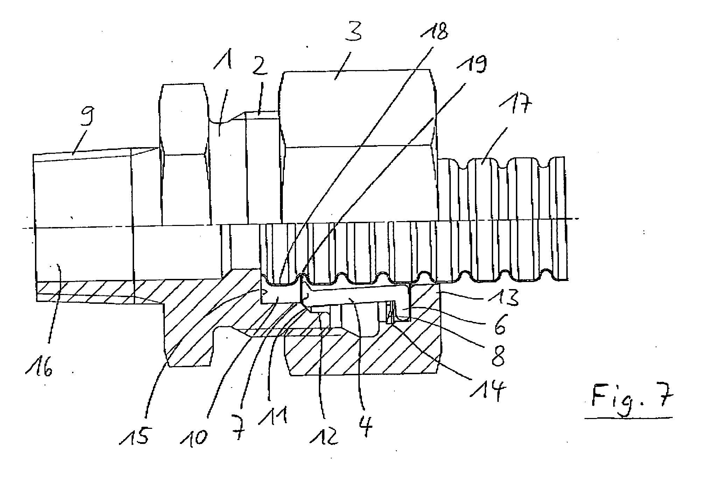

In den Figuren 3 und 7 ist der Metallschlauch 17 so weit in das Anschlussteil 1 hineingesteckt worden, dass sein vorderes Ende gegen die Dichtfläche 15 stößt. Die Haltevorsprünge 7 der Segmente 5 des Halterings 4 greifen hierbei bereits in das erste Wellental 19 ein, unterstützt durch die Einführschräge 11 im Anschlussteil 1.

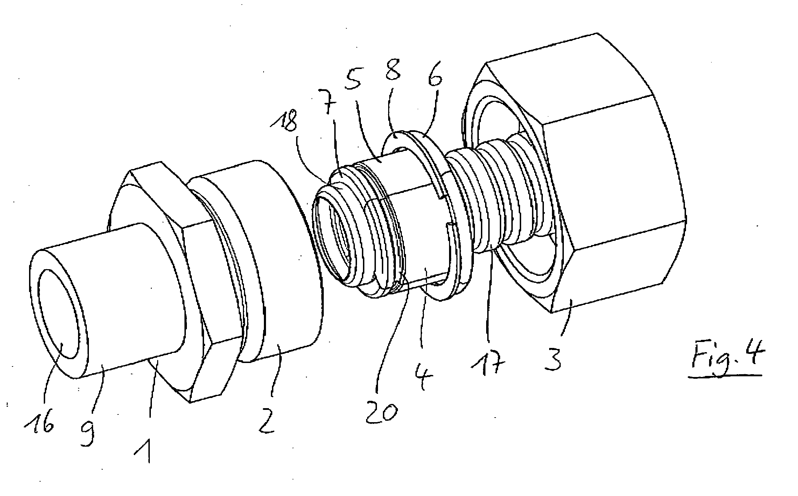

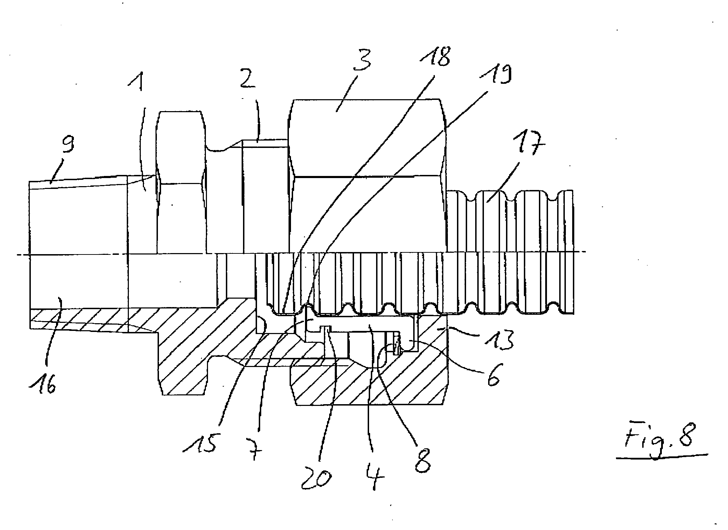

Um diesen Vorgang für den Bediener transparenter und noch effizienter zu machen, kann das modifizierte Ausführungsbeispiel der Figuren 4 und 8 vorgesehen sein. Die Modifikation des Ausführungsbeispiels liegt darin, dass der Haltering 4 bzw. dessen Segmente 5 außen mit einer umlaufenden Nut 20 versehen sind, in der ein (hier nicht dargestellter) Elastomer-Ring sitzt. Dieser Elastomer-Ring sorgt dafür, dass die Segmente 5 sofort wieder in ihre Ausgangsstellung zurückgehen, sobald die Haltevorsprünge 7 in das erste Wellental 19 des Metallschlauchs 17 eingreifen. Die Unterstützung der Einführschräge 11 braucht es in diesem Zusammenhang dann nicht. Gleichzeitig führt dies zu einem für den Bediener leicht erkennbaren Einrasten des Metallschlauchs 17 in der Anschlussvorrichtung, da die klinkenartig ausgebildeten Haltevorsprünge 7 aufgrund der elastischen Rückstellkraft des Elastomer-Rings in das Wellental 19 des Metallschlauchs 17 einschnappen und eine gewisse Sicherung gegen ein Wieder-Herausziehen des Metallschlauchs 17 ausbilden. Der Benutzer weiß so auch sofort, dass der Metallschlauch 17 weit genug und exakt positioniert in der Anschlussvorrichtung sitzt, so dass der Anschluss durch Aufschrauben der Überwurfmutter 3 hergestellt werden kann.

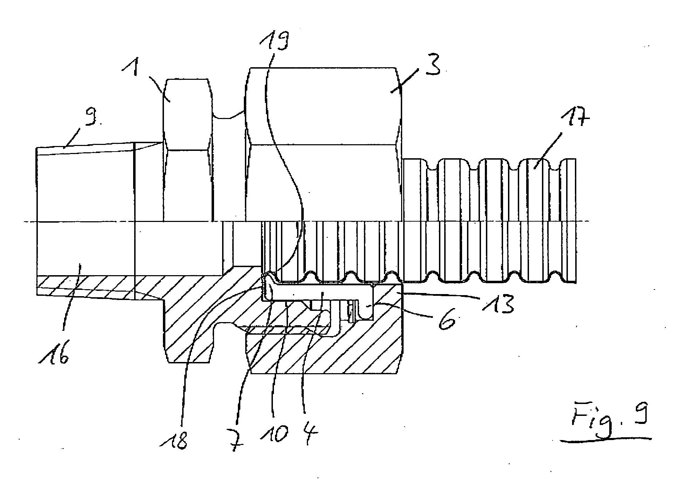

In Figur 9 ist das in den Figuren 1 bis 3 und 5 bis 7 dargestellte Ausführungsbeispiel einer erfindungsgemäßen Anschlussvorrichtung schließlich abdichtend befestigt. Die Überwurfmutter 3 ist festgezogen worden, wodurch die Haltevorsprünge 7 der Segmente 5 des Halterings 4 die Außenkrempe 18 der vordersten Welle des Metallschlauchs 17 gegen die Dichtfläche 15 gebördelt haben. Hierbei wurde der Haltering 4 entlang der zylindrischen Wandung der Aufnahmebohrung 10 des Anschlussteils 1 geführt. Da vorliegend ein Metallschlauch 17 verwendet wird, dessen Außenkrempen eine fast dreimal so lange axiale Ausdehnung aufweisen, wie seine Wellentäler, ist an der Dichtfläche 15 ein Bördel entstanden, der sich radial nach Außen ausgedehnt hat und über den Außendurchmesser der normalen Wellenaußenkrempen hinausreicht. Gleichzeitig ist die Rückwand 13 der Überwurfmutter 3 so dicht an den Metallschlauch 17 herankonstruiert, dass sich im Ergebnis eine rein axiale Krafteinleitung von der Rückwand 13 der Überwurfmutter 3 über die Segmente 5 des Halterings 4 und den Bördel der ersten Außenkrempe 18 des Metallschlauchs 17 gegen die Dichtfläche 15 ergibt. Radiale Kräfte treten nicht auf, so dass an der Dichtfläche 15 ohne weiteres eine metallische Dichtung entstehen kann. Selbstverständlich ist es hierbei nicht ausgeschlossen, dass zusätzlich ein Dichtungselement eingelegt wird.

Wenn die Dichtfläche 15 nicht, wie in Figur 9 dargestellt, als radiale Fläche, sondern (wie nicht dargestellt) ballig, mit einem Absatz versehen oder mit einem Bund versehen wird, können noch höhere Flächenpressungen erzielt werden, wodurch sich eine metallische Dichtung noch verbessert.

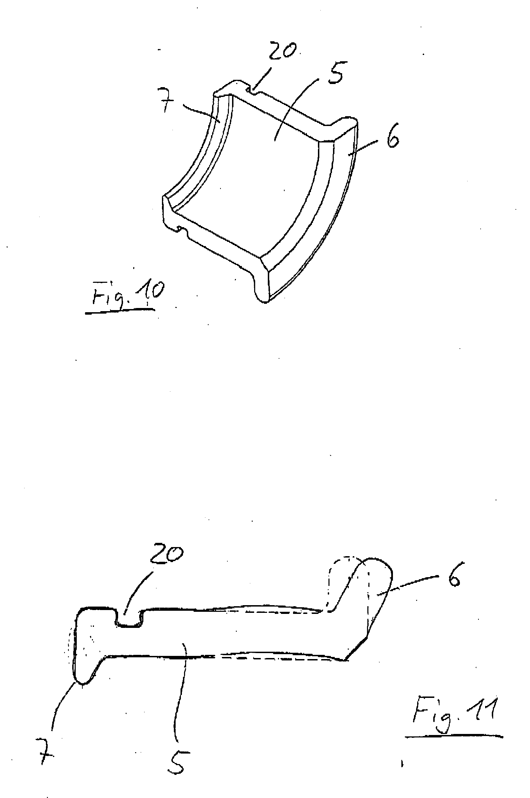

Figur 10 zeigt ein Segment 5 des Halterings 4 in perspektivischer Darstellung, während Figur 11 eine spezielle Ausbildung eines solchen Segments 5 verdeutlicht. Das hier dargestellte Segment weist im Ruhezustand eine Auskragung 6 auf, die in Axialrichtung gesehen nach rückwärts gekippt ist und beim Aufschrauben der Überwurfmutter 3, also bei einer axialen Krafteinleitung, sich elastisch in die mit durchbrochenen Linien dargestellte Form verformt. Hierdurch ergibt sich insgesamt eine axiale Elastizität des Halterings 4, so dass dieser an seiner Stirnseite eine Kraft auf die gebördelte erste Außenkrempe 18 des Metallschlauchs 17 aufbringt, die auch dann unverändert bleibt, wenn der axiale Abstand zwischen der Dichtfläche 15 und der Rückwand 13 der Überwurfmutter 3 wegen Setzungseffekten mit der Zeit minimal größer wird.

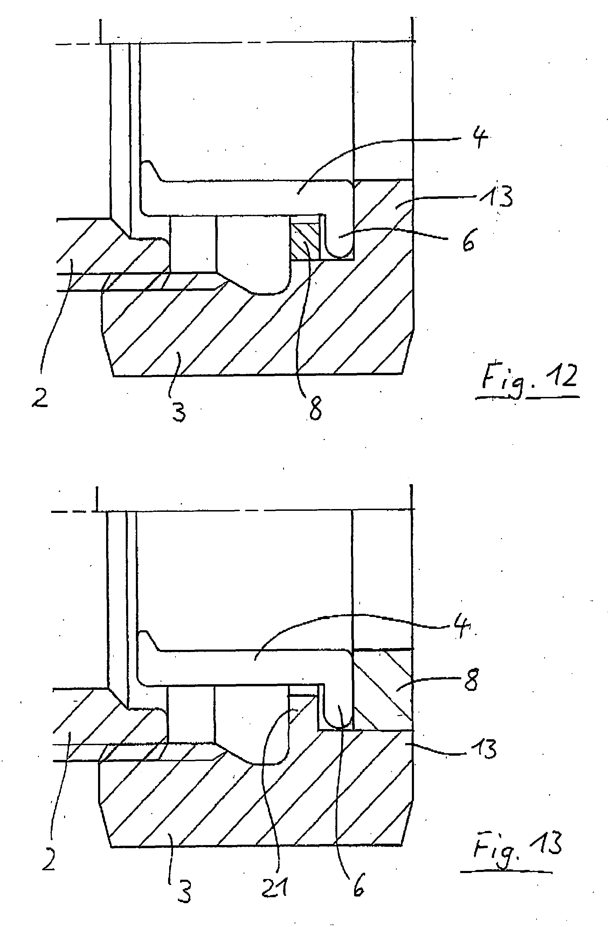

Die Figuren 12 und 13 zeigen in einer Darstellung wie Figur 5 jeweils einen Detailausschnitt, um zu verdeutlichen, dass das in Figur 5 dargestellte Halteelement 8 anders realisiert werden kann. So zeigt Figur 12 eine Ausbildung des Haltelements 8, für das keine Nut 14 in der Überwurfmutter 3 vorgesehen sein muss. Dieses Halteelement 8 ist vielmehr in die Überwurfmutter 3 eingeklebt. Es kann jedoch genauso gut durch Einpressen, Einschnappen, Einrasten, Einlöten, Einschweißen oder Einschrauben in der Überwurfmutter 3 fixiert werden.

Figur 13 zeigt gegenüber den Figuren 5 und 12 eine grundsätzlich andere Ausbildung eines Haltelements 8. Hier ist in der Überwurfmutter 3 anstatt einer Nut 14 ein umlaufender Vorsprung 21 vorgesehen. Dieser Vorsprung 21 ist einstückig mit der Überwurfmutter 3 ausgebildet und an diese angeformt. Der Haltering 4 kann also nicht über den Vorsprung 21 hinweg gezogen werden, wodurch es auch unmöglich wird, den Haltering 4 von "vorne", also von der Gewindeseite der Überwurfmutter 3 in diese einzusetzen. Vielmehr ist die Rückwand 13 der Überwurfmutter 3 mit einer deutlich größeren Bohrung versehen, als in den Ausführungsbeispielen der Figuren 5 und 12. Diese Bohrung besitzt eine lichte Weite, die es ermöglicht, den Haltering 4 von der Rückseite der Überwurfmutter 3, durch die Rückwand 13 hindurch, in die Überwurfmutter 3 einzusetzen und in die gezeigte Position zu bringen, in der die Auskragungen 6 der Segmente des Halterings 4 den Vorsprung 21 hintergreifen. Ein ringförmiges Halteelement 8, das zur Reduzierung der lichten Weite der Bohrung in der Rückwand 13 der Überwurfmutter 3 dient, ist mittels Einpressen, Einkleben, Einschnappen, Einrasten, Einlöten, Einschweißen oder Einschrauben in der Überwurfmutter 3 fixiert, so dass die Auskragungen 6 der Segmente des Halterings 4 zwischen dem ringförmigen Vorsprung 21 und dem ringförmigen Halteelement 8 in der Überwurfmutter 3 festgehalten werden. Dies kann durchaus, wie dargestellt, mit einem gewissen Spiel verbunden sein. Dies ist insbesondere dann vorteilhaft, wenn ein Haltering 4 wie in den Figuren 10 und 11 dargestellt verwendet wird.

Die Werkstoffe sämtlicher Teile der dargestellten Ausführungsbeispiele einer erfindungsgemäßen Anschlussvorrichtung bestehen aus Metall, so dass Fluide mit hohen oder sehr tiefen Temperaturen, oder aggressive Fluide durchgeleitet werden können.

## Patentansprüche

1. Anschlussvorrichtung für einen ringgewellten Metallschlauch, umfassend ein Anschlussteil (1), eine Überwurfmutter (3) sowie einen zwischen dem Anschlussteil (1) und der Überwurfmutter (3) angeordneten Haltering (4), wobei das Anschlussteil (1) eine Aufnahmebohrung (10) zur Aufnahme eines Endbereichs eines ringgewellten Metallschlauchs (17) sowie ein Außengewinde (2) zum Aufschrauben der Überwurfmutter (3) aufweist, wobei der Haltering (4) und die Überwurfmutter (3) so dimensioniert sind, dass der Endbereich des ringgewellten Metallschlauchs (17) hindurch gesteckt werden kann, und wobei der Haltering (4) so ausgebildet ist, dass er beim Aufschrauben der Überwurfmutter (3) auf das Außengewinde (2) des Anschlussteils (1), bei eingestecktem Metallschlauch (17), in ein Wellental (19) des Metallschlauchs (17) eingreift und den Metallschlauch (17) hierdurch festhält und/oder gegen eine axiale Begrenzung (15) in der Aufnahmebohrung (10) des Anschlussteils (1) drückt,
**dadurch gekennzeichnet,**
**dass** der Haltering (4) umfangsverteilt in axial einstückig ausgebildete Segmente (5) vollständig aufgeteilt ist, welche im Bereich seiner zum Anschlussteil (1) weisenden Stirnseite mit radial nach innen weisenden Haltevorsprüngen (7) versehen sind, die im Ausgangszustand bei eingestecktem Metallschlauch (17) in ein Wellental (19) eingreifen, wobei die Segmente (5) bei noch nicht aufgeschraubter Überwurfmutter (3), im Wesentlichen ohne elastische Verformung, um eine im wesentlichen tangential verlaufende Kippachse so nach Außen kippbar sind, dass ein Einstecken des ringgewellten Metallschlauchs (17) an den Haltevorsprüngen (7) vorbei möglich ist.

2. Anschlussvorrichtung nach Anspruch 1,
**dadurch gekennzeichnet,**
**dass** ein Halteelement (8) vorgesehen ist, das den Haltering (4) im Inneren der Überwurfmutter (3) hält.

3. Anschlussvorrichtung nach Anspruch 2,
**dadurch gekennzeichnet,**
**dass** der Haltering (4) an seiner zur Überwurfmutter (3) weisenden Stirnseite eine radial nach Außen weisende Auskragung (6) oder radial nach Außen vorspringende Fußelemente aufweist, und dass das Halteelement (8) in der Art eines Sprengrings ausgebildet ist, der die Auskragung (6) oder die Fußelemente in der Überwurfmutter (3) hält.

4. Anschlussvorrichtung nach Anspruch 2,
**dadurch gekennzeichnet,**
**dass** der Haltering (4) an seiner zur Überwurfmutter (3) weisenden Stirnseite eine radial nach Außen weisende Auskragung (6) oder radial nach Außen vorspringende Fußelemente aufweist, und dass das Halteelement (8) als Ring oder eine Anzahl von umfangsverteilten Vorsprüngen ausgebildet ist, die die Auskragung (6) oder die Fußelemente in der Überwurfmutter (3) halten und durch Einpressen, Einkleben, Einschnappen, Einrasten, Einlöten oder Einschweißen in der Überwurfmutter fixiert sind.

5. Anschlussvorrichtung nach Anspruch 2,
**dadurch gekennzeichnet,**
**dass** der Haltering (4) an seiner zur Überwurfmutter (3) weisenden Stirnseite eine radial nach Außen weisende Auskragung (6) oder radial nach Außen vorspringende Fußelemente aufweist, und dass die Überwurfmutter (3) mit einem angeformten Ring oder einer Anzahl von angeformten Vorsprüngen versehen ist, die die Auskragung (6) oder die Fußelemente des Halterings (4) zur Öffnung der Überwurfmutter (3) hin hintergreifen, und dass die Rückseite (13) der Überwurfmutter (3) eine Öffnung aufweist, deren lichte Weite mindestens dem Außendurchmesser der Auskragung (6) oder der Fußelemente des Halterings (4) entspricht, wobei das Halteelement (8) in diese Öffnung des Bodens der Überwurfmutter (3) einsetzbar und dort fixierbar ist.

6. Anschlussvorrichtung nach Anspruch 2,
**dadurch gekennzeichnet,**
**dass** der Haltering (4) an seiner zur Überwurfmutter (3) weisenden Stirnseite eine radial nach Außen weisende Auskragung (6) oder radial nach Außen vorspringende Fußelemente aufweist, und dass das Halteelement (8) als schmaler Ring mit einem Außengewinde oder mit nach Außen weisenden Krallen ausgebildet ist, der in das Gewinde der Überwurfmutter (3) eingeschraubt oder eingesetzt werden kann und hierdurch die Auskragung (6) oder die Fußelemente des Halterings (4) in der Überwurfmutter (3) hält.

7. Anschlussvorrichtung nach mindestens einem der Ansprüche 1 bis 6,
**dadurch gekennzeichnet,**
**dass** die Segmente (5) des Halterings (4) mittels eines Federrings elastisch gegen ein nach Außen gerichtetes Kippen gesichert sind.

8. Anschlussvorrichtung nach Anspruch 7,
**dadurch gekennzeichnet,**
**dass** die radial nach Innen weisenden Haltevorsprünge (7) der Segmente (5) des Halterings (4) zur Ausbildung einer Ausziehsicherung für den Metallschlauch (17) als Klinken ausgeformt sind.

9. Anschlussvorrichtung nach mindestens einem der Ansprüche 1 bis 8,
**dadurch gekennzeichnet,**
**dass** die Segmente (5) eine axiale Elastizität aufweisen, wobei die axiale Elastizität insbesondere durch eine elastische Ausbildung von im Einbauzustand an die Überwurfmutter (3) angrenzenden Segmentfußbereichen hergestellt ist.

10. Anschlussvorrichtung nach Anspruch 9,
**dadurch gekennzeichnet,**
**dass** die elastische Ausbildung der Segmentfußbereiche durch eine federnde, im entspannten Zustand konische Formung einer Auskragung (6) oder von Fußelementen der Segmente (5) hergestellt ist.

11. Anschlussvorrichtung nach mindestens einem der Ansprüche 1 bis 10,
**dadurch gekennzeichnet,**
**dass** der Haltering (4) und seine Segmente (5) aus Metall gefertigt sind.

12. Anschlussvorrichtung nach mindestens einem der Ansprüche 1 bis 11,
**dadurch gekennzeichnet,**
**dass** die axiale Begrenzung des Anschlussteils (1) als im Wesentlichen radial ausgerichtete Dichtfläche (15) ausgebildet ist, wobei das Anschlussteil (1), der Haltering (4) und die Überwurfmutter (3) so dimensioniert und ausgestaltet sind, dass die Haltevorsprünge (7) der Haltering-Segmente (5) beim Festziehen der Überwurfmutter (3) in das erste Wellental (19) des Metallschlauchs (17) eingreifen und die Außenkrempe (18) der ersten Welle axial so gegen die Dichtfläche (15) des Anschlussteils (1) drücken, dass diese unter Ausbildung eines Bördels flach gepresst wird.

13. Anschlussvorrichtung nach Anspruch 12,
**dadurch gekennzeichnet,**
**dass** die Außenkrempen (18) der Wellen des Metallschlauchs (17) eine größere axiale Ausdehnung aufweisen als die Wellentäler (19), vorzugsweise mit einem Faktor von etwa 2 bis 3.

14. Anschlussvorrichtung nach mindestens einem der Ansprüche 1 bis 13,
**dadurch gekennzeichnet,**
**dass** das Anschlussteil (1), die Überwurfmutter (3) und der Haltering (4) so dimensioniert sind, dass bei aufgeschraubter Überwurfmutter (3) eine rein axiale Krafteinleitung von der Überwurfmutter (3) über den Haltering (4) auf den Metallschlauch (17) erfolgt.

15. Anschlussvorrichtung nach mindestens einem der Ansprüche 1 bis 14,
**dadurch gekennzeichnet,**
**dass** die Aufnahmebohrung (10) des Anschlussteils (1) sich unter Ausbildung einer Einführschräge (11) zur Überwurfmutter (3) hin erweitert,
wobei das Anschlussteil (1), der Haltering (4) und die Überwurfmutter (3) so dimensioniert sind, dass die zum Anschlussteil (1) weisende Stirnseite des Halterings (4) bei nur teilweise aufgeschraubter Überwurfmutter (3) sich in solch einem Bereich der Erweiterung (12) der Aufnahmebohrung (10) des Anschlussteils (1) befindet, dass die Segmente (5) kippbar sind, um ein Einstecken des Metallschlauchs (17) durch die Überwurfmutter (3) und an den Haltevorsprüngen (7) des Halterings (4) vorbei zu ermöglichen, während die Segmente (5) mittels der Einführschräge (11) in der Aufnahmebohrung (10) des Anschlussteils (1) zurückgekippt werden, wenn die Überwurfmutter (3) weiter eingeschraubt wird.
